# EUROPÄISCHE PATENTSCHRIFT

(11) **EP 1 854 523 B1**
(45) Veröffentlichungstag und Bekanntmachung des Hinweises auf die Patenterteilung: **15.10.2014**
(21) Anmeldenummer: 07106011.5
(22) Anmeldetag: 12.04.2007
(51) Int. Cl.: B01D 3/00, B01J 4/00, B01J 10/00, B01D 53/18, B01D 45/16

(54) **Fluideintrittseinrichtung für einen Apparat**
Fluid inlet device for an apparatus
Dispositif d'entrée d'un fluide pour un appareil

(30) Priorität: 12.05.2006 EP 06405203
(43) Veröffentlichungstag der Anmeldung: 14.11.2007
(73) Patentinhaber: Sulzer Chemtech AG, 8404 Winterthur (CH)
(72) Erfinder: Bachmann, Christian Gottlieb, 8548 Ellikon an der Thur (CH); Schaeffer, Pierre, 8409 Winterthur (CH); Muggli, Felix, 8431 Neftenbach (CH)
(74) Vertreter: Manitz, Finsterwald & Partner GbR

(56) Entgegenhaltungen:
- EP-A- 1 279 428
- EP-A1- 1 018 360
- WO-A-03/070348
- WO-A1-2005/058503
- DE-A1- 1 519 711
- US-A1- 2005 029 686

## Beschreibung

Die Erfindung betrifft eine Fluideintrittseinrichtung für einen Apparat, insbesondere für eine Kolonne, gemäss Oberbegriff von Anspruch 1. Sie bezieht sich auch auf einen Apparat mit der erfindungsgemässen Fluideintrittseinrichtung sowie auf eine Verwendung der Fluideintrittseinrichtung.

Aus der DE-A- 1 519 711 ist eine Fluideintrittseinrichtung, nämlich eine Einlass- und Verteileinrichtung für ein Flüssigkeits/Dampf-Gemisch bekannt, mit der ein solches zweiphasiges Fluid in einen Apparat, insbesondere eine Kolonne eingespeist werden kann, wobei gleichzeitig die im Fluid mitgeführte Flüssigkeit (in Form von Flüssigkeitströpfchen) abscheidbar ist. Dabei wird durch eine Mehrzahl von gekrümmten Leitlamellen oder Leitschaufeln das einströmende Fluid in Teilströme verzweigt und jeder Teilstrom darart umgelenkt, dass die dichtere Phase unter Nutzung von Zentrifugalkräften zumindest teilweise abgeschieden werden kann. Der Dampf wird über den Querschnitt des Apparats verteilt, während Flüssigkeit abgeschieden wird. Diese bekannte Fluideintrittseinrichtung kann selbstverständlich auch zum Einspeisen eines einphasigen Fluids (Flüssigkeit oder Gas) verwendet werden. Sie ergibt eine gleichmässige Strömung an einem unteren Eintritt zu beispielsweise einer Packung, die beabstandet über der Fluideintrittseinrichtung angeordnet ist. Statt der Packung können auch andere Einbauten im Apparat oder in der Kolonne vorgesehen sein, beispielsweise eine Einrichtung zum Abscheiden von mitgeführten Flüssigkeitströpfchen, die nicht in der Fluideintrittseinrichtung abgefangen worden sind. Die Fluideintrittseinrichtung besteht aus einer relativ aufwändigen Blechkonstruktion

Aus der EP-A- 1 018 360 (= P.6929) ist eine weitere und wesentlich einfachere Fluideintrittseinrichtung bekannt, die durch eine relativ kleine Umlenkeinheit für das in eine Kolonne eingespeiste Fluid gebildet ist. Die Umlenkeinheit macht weniger Material erforderlich und ist einfacher herzustellen. Allerdings eignet sich die einfachste Ausführungsform dieser Umlenkeinheit nicht, bei einem zweiphasigen Fluid simultan mit der Gasverteilung auch Flüssigkeit abzuscheiden. In der Umlenkeinheit werden zwei laterale Teilströme gebildet, die weitgehend spiegelsymmetrisch entlang einer Innenwand der Kolonne fliessen und anschliessend nach einem Wiedervereinen einen rückfliessenden Strom bilden, dessen horizontale Geschwindigkeitskomponente radial und zur Umlenkeinheit hin gerichtet ist. Mittels der Umlenkeinheit wird mindestens ein dritter, zentraler Teilstrom gebildet, der radial und bezüglich dem rückfliessenden Strom der wiedervereinten Teilströme entgegengesetzt gerichtet ist. Der dritte Teilstrom wird so stark ausgebildet, dass der rückfliessende Strom weitgehend an einem Durchströmen des Kolonnenzentrums gehindert wird. Durch die Umlenkeinheit sind also ein zentraler und zwei laterale Teilströme erzeugbar, die durch eine Interaktion in einem Mittenbereich des Apparats (Kolonne) eine Strömungsberuhigung bewirken, wobei sich eine Strömungsform ergibt, die zu einer gleichmässigen Geschwindigkeitsverteilung unter der Packung führt. Der Gasstrom entwickelt sich nach dem Austritt aus der Umlenkeinheit frei; er muss nicht unter Verwendung einer aufwändigen Blechkonstruktion gelenkt werden.

Aufgabe der Erfindung ist es, eine weitere Fluideintrittseinrichtung zu schaffen, die eine möglichst einfache Umlenkeinheit für einen Flüssigkeit enthaltenden Gasstrom ist, mit welcher simultan eine Gasverteilung und Abscheidung zumindest eines Teils der Flüssigkeit durchführbar ist. Diese Aufgabe wird durch die im Anspruch 1 definierte Einrichtung gelöst.

Die Fluideintrittseinrichtung ist für einen Apparat, insbesondere für eine Kolonne vorgesehen. Diese Einrichtung umfasst einen Zulaufstutzen und eine an diesen stromabwärts anschliessende Umlenkeinheit mit gekrümmten Leitlamellen. Durch die Umlenkeinheit sind aus einem eingespeisten Fluidstrom zentrale und laterale Teilströme erzeugbar, die durch eine Interaktion in einem Mittenbereich des Apparats eine Strömungsberuhigung bewirken. Die Umlenkeinheit umfasst eine Eingangszone mit einer Mehrzahl von Zulaufkanälen, in der die Kanalquerschnitte konstant bleiben. Diese Eingangszone kann zumindest teilweise im Zulaufstutzen angeordnet sein. Die Zulaufkanäle gehen in diffusorartige, mit den gekrümmten Leitlamellen gebildete Kanäle über. Mindestens zwei Etagen mit jeweils mindestens einem zentralen Kanal und zwei lateralen Kanälen liegen vor. Die Teilströme der zweiten und gegebenenfalls dritten, weiter unten angeordneten Etage sind durch gekrümmte Leitlamellen nach unten umlenkbar.

Modellrechnungen (CFD-Simulationen) bestätigten, dass die erfindungsgemässe Einrichtung mit Leitblechen, die diffusorartige Strömungskanäle bilden (allerdings Kanäle mit relativ grossem Öffnungswinkel) zu einer gleichmässigen Geschwindigkeitsverteilung an der Packung führt. Experimente zeigen, dass die Abscheidung einer sich im Gasstrom befindenden Flüssigkeit relativ gut ist, nämlich praktisch gleich gut wie bei der komplexeren Fluideintrittseinrichtung, die durch die oben zitierte DE-A- 1 519 711 offenbart ist.

Die abhängigen Ansprüche 2 bis 7 betreffen vorteilhafte Ausführungsformen des erfindungsgemässen Fluideintrittseinrichtung für einen Apparat. Ein solcher Apparat sowie eine Verwendung der erfindungsgemässen Fluideintrittseinrichtung sind jeweils Gegenstand der Ansprüche 8 bzw. 9.

Nachfolgend wird die Erfindung anhand der Zeichnungen erläutert. Es zeigen:
- Fig. 1: einen Querschnitt durch eine Kolonne mit erfindungsgemässer, Teilströme erzeugender Fluideintrittseinrichtung,
- Fig. 2: die zur Hälfte dargestellte Fluideintrittseinrichtung der Fig. 1 mit einer schematischen Darstellung der Teilströme,
- Fig. 3: die gleiche aber detaillierter dargestellte Fluideintrittseinrichtung,
- Fig. 4: einen Querschnitt durch den Zulaufstutzen der Kolonne der Fig. 1 mit einer bevorzugten Kanalkonfiguration,
- Fig. 5: eine Umlenkeinheit der Fluideintrittseinrichtung, die von einer Position unterhalb der Umlenkeinheit aus dargestellt ist, und
- Fig. 6: eine Umlenkeinheit wie in Fig. 5, die zusätzliche Elemente enthält und bei der eine Lamelle weggelassen ist.

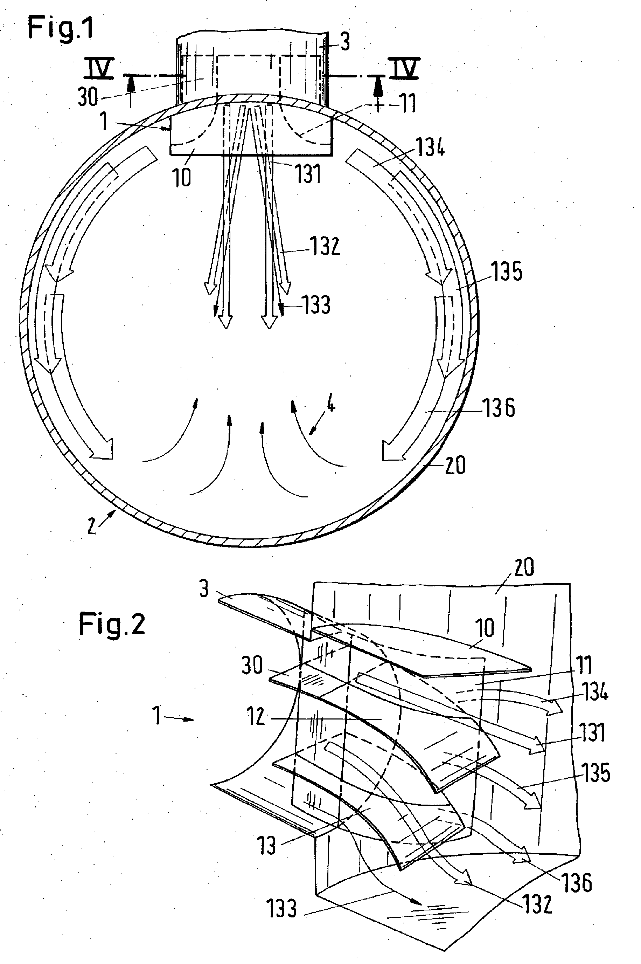

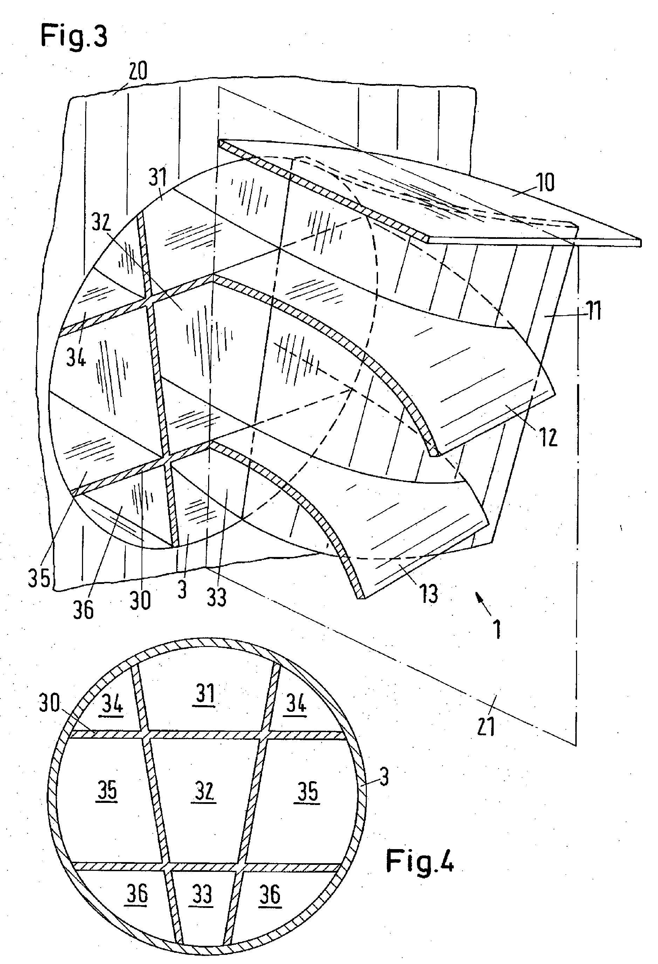

Ein Apparat, insbesondere eine Kolonne 2, mit einer erfindungsgemässen Fluideintrittseinrichtung ist als Querschnitt in Fig. 1 dargestellt. In einem Zulaufstutzen 3 ist ein aus ebenen Wandstücken zusammengesetztes Gitter 30 angeordnet, das Zulaufkanäle 31, 32, ... 36 bildet: siehe die Kanalkonfiguration in Fig. 4 (Schnitt nach der Linie IV-IV in Fig. 1). Stromabwärts, an den Zulaufstutzen 3 anschliessend folgt eine Umlenkeinheit 1, die gekrümmte Leitlamellen 11, 12, 13 umfasst. Ein Fluid, das einphasig oder mehrphasig sein kann, wird in die Kolonne 2 eingespeist. Dieses wird mit den Leitlamellen 11, 12, 13 auf gekrümmten Bahnen geführt und nach Austritt aus der Umlenkeinheit 1 über den Querschnitt der Kolonne 2 verteilt. In der Umlenkeinheit 1 ist - im Fall eines zweiphasigen Fluids - eine disperse Phase höherer Dichte unter Nutzung deren Trägheit (beispielsweise Zentrifugalkraft) zumindest teilweise abscheidbar. Das Gitter 30 im Zulaufstutzen 3 kann sehr kurz sein oder sogar ganz wegfallen. Allerdings muss eine entsprechende gitterartige Eingangszone in der Umlenkeinheit 1 vorgesehen sein, in der die Querschnitte der Kanäle konstant bleiben. Diese Eingangszone kann zumindest teilweise im Zulaufstutzen angeordnet sein. Nach der Eingangszone werden die Kanalwände durch gekrümmte Bereiche der Leitlamellen 11, 12, 13 gebildet.

In der dargestellten Ausführungsform gehen die Zulaufkanäle 31, 32, ... 36, welche die im Zulaufstutzen 3 angeordnete Eingangszone bilden und die jeweils eine konstante Querschnittsfläche haben, in diffusorartige, mit den gekrümmten Leitlamellen 11, 12, 13 und der Kolonnenwand 20 gebildete Kanäle der Umlenkeinheit 1 über. Dank der diffusorartigen Formgebung wird kinetische Energie der Strömung in einen Anstieg des statischen Drucks umgesetzt, so dass ein Druckverlust reduziert wird. Die Zulaufkanäle 31, 32, ... 36 und die stromabwärts folgenden, diffusorförmigen Kanalabschnitte sind so ausgebildet, dass ein Druckverlust im einströmenden Fluid minimal oder weitgehend minimal ausfällt.

Aus dem eingespeisten Fluidstrom werden durch die Umlenkeinheit 1 zentrale Teilströme 131, 132, 133 und laterale Teilströme 134, 135, 136 erzeugt: siehe Figuren 1 und 2. Die lateralen Teilströme 134, 135, 136, die spiegelsymmetrisch entlang der Wand 20 strömen, bilden anschliessend nach einem Wiedervereinen ein Strömungsfeld 4, bei dem die horizontalen Geschwindigkeitskomponenten des rückfliessenden Gases weitgehend radial und zur Umlenkeinheit 1 hin gerichtet sind. Durch eine Interaktion mit den zentralen Teilströmen 131, 132, 133 im Mittenbereich des Apparats ergibt sich eine Strömungsberuhigung.

Das Gitter 30 und entsprechend die Umlenkeinheit 1 umfassen Etagen mit jeweils einem zentralen Kanal 31, 32 bzw. 33 und lateralen Kanäle 34, 35 bzw. 36, die paarweise und spiegelbildlich vorliegen. Es gibt mindestens zwei Etagen. Bei der in den Figuren 1 bis 4 dargestellten Ausführungsform sind es drei Etagen mit jeweils drei Kanälen. Die Querschnittsflächen weisen in der Regel verschieden grosse Querschnittsflächen auf. Die Spiegelachse der Kanalkonfiguration kann - anders als dargestellt - auf einer zentralen Wand des Gitters 30 liegen. In diesem Fall haben die Etagen jeweils zwei zentrale Kanäle.

Die gekrümmten Lamellen 11, mit denen in der Umlenkeinheit 1 die lateralen Teilströme 134, 135, 136 zur Kolonnenwand 20 umgelenkt werden, trennen die zentralen von den lateralen Kanälen. Die Teilströme 132, 133, 135 und 136 der zweiten und der dritten, weiter unten angeordneten Etage werden durch die gekrümmten Leitlamellen 12 und 13 nach unten umgelenkt: siehe Fig. 2, die die linke Hälfte der spiegelsymmetrischen Fluideintrittseinrichtung darstellt. Durch diese gegen unten gerichteten Umlenkungen verbessert sich die Gasverteilung markant gegenüber jener der aus der EP-A- 1 018 360 vorbekannten Umlenkeinheit.

Fig. 3 zeigt etwas übersichtlicher als Fig. 2 die erfindungsgemässe Fluideintrittseinrichtung, die aus einem Teilstück des Zulaufstutzens 3, dem Gitter 30 und der Umlenkeinheit 1 besteht. Von der Umlenkeinheit 1 ist nur die Hälfte dargestellt, die sich hinter einer vertikalen, auf einer Zentralachse des Apparats 2 liegenden Ebene 21 befindet. Die vordere Hälfte ist spiegelbildlich zur hinteren ausgebildet. Das Gitter 30 und die Umlenkeinheit 1 können getrennte Teile sein oder eine zusammenhängende Konstruktion bilden. Die Zulaufkanäle 31 - 36, deren Anzahl vorteilhafterweise neun beträgt, ermöglichen es, dass für das diese Kanäle durchströmende Fluid verschiedene Strömungswiderstände entstehen. Diese Massnahme hat eine für die Gasverteilung günstige Ausbildung der Teilströme zur Folge. Die Querschnittsflächen der Zulaufkanäle 31 - 36 können daher verschieden gross sein. Optimale Querschnittsflächen lassen sich empirisch durch Messungen oder numerisch mittels Computermodellen bestimmen. Dabei wird für die Verteilung der vertikalen Geschwindigkeits-Komponente (w; Mittelwert wₘ) an einem gegebenen horizontalen Querschnitt durch die Strömung, beispielsweise am unteren Eintritt zur Packung ein Variationskoeffizient berechnet (Kₚ = √ ∫(w/wₘ - 1)²dA / ∫dA). Dieser Variationskoeffizient ist bei Vorliegen einer optimalen Strömung minimal.

Die Umlenkeinheit 1 kann auch asymmetrisch ausgebildet sein und zwar mit einer Asymmetrie, die in Bezug auf eine den Zulaufstutzen 3 asymmetrisch durchfliessende Strömung des eingespeisten Fluidstroms ausgebildet ist. Eine asymmetrisch Strömung liegt beispielsweise vor, wenn stromaufwärts vor dem Zulaufstutzen 3 ein Krümmer angeordnet ist.

Die Umlenkeinheit 1 und das Gitter 30 lassen sich als Blechkonstruktionen ausführen. Die Umlenkeinheit 1 lässt sich aus zwei Blechen 12, 13 herstellen, deren eingangseitigen Bereiche horizontal und ausgangseitigen Bereiche zungenartig nach unten gebogen sind, sowie aus zwei Blechen 11, die bogenförmig um eine angenähert vertikale Achse gekrümmt sind. Die Konstruktion aus den vier Blechen 11, 12, 13 wird durch ein Dach gedeckt. Die obersten Kanäle sind durch Wandstücke 10 überdacht, die in Richtung des obersten zentralen Teilstroms 131 horizontal ausgerichtet sind. Die überdachenden Wandstücke 10 können auch in Strömungsrichtung nach unten gebogen sein. Die Kanäle der Umlenkeinheit 1 haben aufgrund der gebogenen Bleche 11, 12, 13 variable Querschnitte, die sich in Strömungsrichtung diffusorartig erweitern.

Die Wandstücke 10 können zusammenhängend und beispielsweise in Form eines bogenartigen Blechstücks ausgebildet sein. Die Bleche 12 und 13 können aus zwei Teilflächen zusammen gesetzt sein, die jeweils auf der Ebene 21 (Fig. 3) an einander grenzen und dabei eine pflugartige V-Form bilden, deren gekrümmter Kamm oder Falte auf der vertikalen Symmetrieebene 21 liegt. Die beiden Teilflächen, die seitlich vom Kamm nach unten gebogen sind, lenken die Strömung teilweise aus der Mitte zu den Seiten des Apparats.

Die Zulaufkanäle mit jeweils konstanter Querschnittsfläche unterscheiden sich bei der gezeigten Ausführungsform folgendermassen (Fig. 4): Die horizontalen Breiten der zentralen Zulaufkanäle verjüngen sich von oben nach unten, und die Zulaufkanäle der mittleren Etage weisen die grössten Querschnittsflächen auf. Es sind auch Konfigurationen mit anderen Abmessungen möglich, beispielsweise solchen, bei denen keine Verjüngung vorliegen.

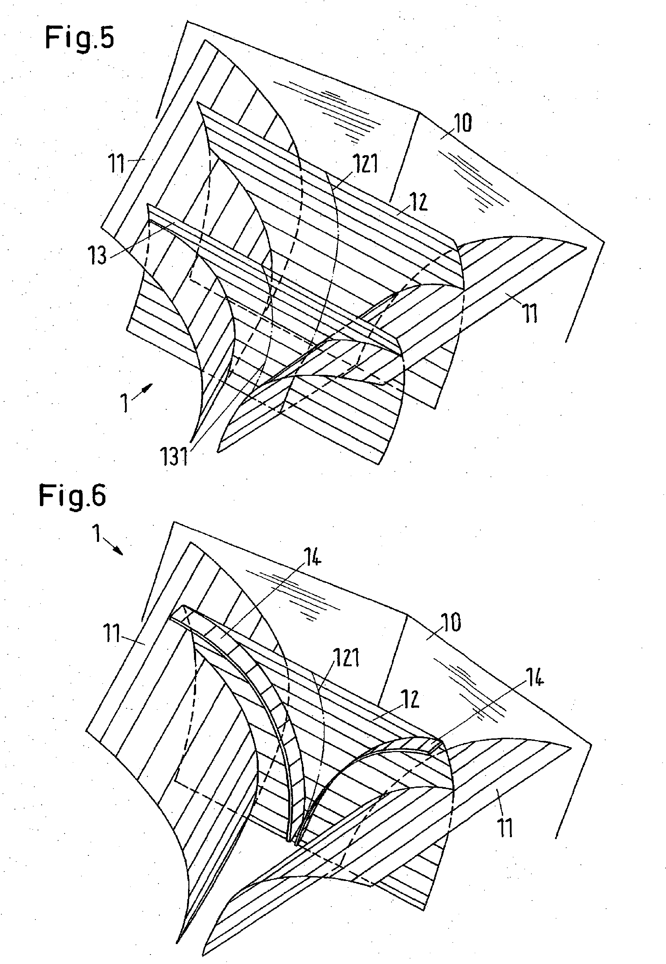

Fig. 5 zeigt eine Umlenkeinheit 1 der erfindungsgemässen Fluideintrittseinrichtung, die von einer Position unterhalb der Umlenkeinheit 1 aus dargestellt ist (aus der "Froschperspektive"). Auf den konkaven Oberflächen, d.h. den sichtbaren, unteren Flächen der Lamellen 12 und 13 wird bei einem zweiphasigen Fluid Flüssigkeit abgeschieden. (Die Schnittkurven der Zentralebene 21, hier nicht dargestellt, mit den Lamellen 12 und 13 sind mit strichpunktierten Linien 121 bzw. 131 angegeben.) In Fig. 6 ist eine Umlenkeinheit 1 wie in Fig. 5 abgebildet, wobei nur die Lamelle 12 dargestellt und die Lamelle 13 weggelassen ist. Auf der Unterseite der Lamelle 12 sind zwei zusätzliche Elemente 14 angeordnet, die Rippen zu einer Flüssigkeitsableitung bilden. Solche Flüssigkeitsabweiser 14 können auch gekrümmte Rippen mit L- oder U-Profil sein, wobei jeweils eine der Flanken dieser Profile auf der Lamellenoberflächen bündig aufliegen soll. Ebenso ist ein gegen die Strömung geöffnetes halbes Röhrchen möglich. Entsprechende Abweiser sind auch auf den konkaven, weitgehend nicht sichtbaren Aussenseiten der seitlichen Lamellen 11 von Vorteil. Solche Abweiser lenken aufgrund einer Form mit geeigneter Krümmung abgeschiedene Flüssigkeit nach unten.

Die gekrümmten Leitlamellen 11, 12, 13 können zusätzlich an ausgangseitigen Rändern taschenartig ausgebildet sein, so dass eine an den Leitlamellen abgeschiedene flüssige Phase durch Abfliessspalten in den taschenartigen Rändern aus dem eingespeisten Fluidstrom wegleitbar ist (nicht dargestellt).

Ein Apparat, insbesondere eine Kolonne 2 umfasst mindestens eine erfindungsgemässe Fluideintrittseinrichtung. Dabei weist eine Strömungsrichtung, die durch einen zentralen Kanal 31 gegeben ist, auf das Zentrum des Mittenbereichs vor der Umlenkeinheit 1. Diese Teilströmung kann - beispielsweise bei einer asymmetrischen Ausführungsform der Fluideintrittseinrichtung - auch auf einen exzentrischen Punkt im Mittenbereich gerichtet sein.

Die erfindungsgemässe Fluideintrittseinrichtung lässt sich verwenden, um ein Fluid, das mehrphasig oder einphasig ist, in einen Apparat oder eine Kolonne 2 einzuspeisen und dort zu verteilen. Das Fluid ist insbesondere ein Gas, das mit einer dichteren Phase, beispielsweise Flüssigkeitströpfchen, befrachtet ist. Es kann auch aus nur einem Stoff oder einem einphasigen Stoffgemisch bestehen. In der Umlenkeinheit 1 - im Fall eines zweiphasigen Fluids - ist eine disperse Phase höherer Dichte zumindest teilweise abscheidbar, wobei Zentrifugalkräfte oder allgemeiner die Trägheit der dispersen Phase zur Abscheidung genutzt werden.

## Patentansprüche

1. Fluideintrittseinrichtung für einen Apparat, insbesondere für eine Kolonne (2), mit einem Zulaufstutzen (3) und einer an diesen stromabwärts anschliessenden Umlenkeinheit (1), die gekrümmte Leitlamellen (11, 12, 13) umfasst, wobei durch die Umlenkeinheit aus einem eingespeisten Fluidstrom zentrale und laterale Teilströme (131, 132, 133 bzw. 134, 135, 136) erzeugbar sind, die durch eine Interaktion in einem Mittenbereich des Apparats eine Strömungsberuhigung bewirken,
**dadurch gekennzeichnet, dass** die Umlenkeinheit eine Eingangszone mit einer Mehrzahl von Zulaufkanälen (31, 32, ... 36) umfasst, in der die Kanalquerschnitte konstant bleiben, wobei diese Eingangszone zumindest teilweise im Zulaufstutzen angeordnet sein kann, dass die Zulaufkanäle in diffusorartige, mit den gekrümmten Leitlamellen gebildete Kanäle übergehen und dass mindestens zwei Etagen mit jeweils mindestens einem zentralen Kanal (31, 32, 33) und zwei lateralen Kanälen (34, 35, 36) vorliegen, wobei die Teilströme der zweiten und gegebenenfalls dritten, weiter unten angeordneten Etage durch gekrümmte Leitlamellen nach unten umlenkbar sind.

2. Fluideintrittseinrichtung nach Anspruch 1, **dadurch gekennzeichnet, dass** auf drei Etagen jeweils drei Kanäle angeordnet sind, und dass in der Umlenkeinheit (1) zwei gekrümmte Lamellen (11) zentrale Kanäle von lateralen Kanälen trennen.

3. Fluideintrittseinrichtung nach Anspruch 1 oder 2, **dadurch gekennzeichnet, dass** die Umlenkeinheit (1) bezüglich einer vertikalen, auf einer Zentralachse des Apparats liegenden Ebene (21) spiegelsymmetrisch ausgebildet ist, oder
dass die Umlenkeinheit asymmetrisch ausgebildet ist, mit einer Asymmetrie, die in Bezug auf eine den Zulaufstutzen (3) asymmetrisch durchfliessende Strömung des eingespeisten Fluidstroms ausgebildet ist.

4. Fluideintrittseinrichtung nach einem der Ansprüche 1 bis 3, **dadurch gekennzeichnet, dass** die obersten Kanäle durch mindestens ein ebenes oder gebogenes Wandstück (10) überdacht sind, welches in Richtung des obersten zentralen Teilstroms (131) horizontal oder nach unten geneigt ausgerichtet ist, oder dass überdachende Wandstücke in Strömungsrichtung nach unten gebogen sind.

5. Fluideintrittseinrichtung nach einem der Ansprüche 1 bis 4, **dadurch gekennzeichnet, dass** die horizontalen Breiten der zentralen Zulaufkanäle (31, 32, 33) sich von oben nach unten verjüngen.

6. Fluideintrittseinrichtung nach einem der Ansprüche 1 bis 5, **dadurch gekennzeichnet, dass** die Zulaufkanäle (31, 32, ... 36) und die stromabwärts folgenden, diffusorförmigen Kanalabschnitte so ausgebildet sind, dass ein Druckverlust im einströmenden Fluid minimal oder weitgehend minimal ist.

7. Fluideintrittseinrichtung nach einem der Ansprüche 1 bis 6, **dadurch gekennzeichnet, dass** auf konkaven Oberflächen der gekrümmten Leitlamellen (11, 12, 13) rippenartige Flüssigkeitsabweiser (14) angeordnet sind und/oder
die gekrümmten Leitlamellen (11, 12, 13) an ausgangseitigen Rändern taschenartig ausgebildet sind, so dass eine an den Leitlamellen abgeschiedene flüssige Phase durch die taschenartigen Ränder aus dem eingespeisten Fluidstrom wegleitbar ist.

8. Apparat, insbesondere Kolonne (2), mit mindestens einer Fluideintrittseinrichtung gemäss einem der Ansprüche 1 bis 7, wobei eine durch einen zentralen Kanal (31) gegebene Strömungsrichtung auf das Zentrum oder einen exzentrischen Punkt des Mittenbereichs weist.

9. Verwendung der Fluideintrittseinrichtung gemäss einem der Ansprüche 1 bis 7 zwecks Einspeisung und Verteilens eines Fluids, das mehrphasig oder einphasig ist, insbesondere eines Gasstroms, der mit einer dichteren Phase, beispielsweise Flüssigkeitströpfchen, befrachtet ist bzw. der aus nur einem Stoff oder einem einphasigen Stoffgemisch besteht, wobei in der Umlenkeinheit - im Fall eines zweiphasigen Fluids - eine disperse Phase höherer Dichte unter Nutzung deren Trägheit zumindest teilweise abscheidbar ist.

## Claims

1. A fluid inlet device for an apparatus, in particular for a column (2), having an inflow stub (3) and a deflection unit (1) adjoining it downstream which comprises curved guide lamellae (11, 12, 13), wherein central and lateral part flows (131, 132, 133, and 134, 135, 136 respectively) can be produced by the deflection unit from a fed in fluid flow, which effect a calming of flow through an interaction in a central area of the apparatus,
**characterised in that** the deflection unit comprises an input zone with a plurality of inlet passages (31, 32, ... 36), in which the passage cross-sections remain constant, with this input zone being able to be arranged at least partly in the inflow stub; **in that** the inlet passages merge into diffuser-like passages formed by the curved guide lamellae; and **in that** at least two stories, each having at least one central passage (31, 32, 33) and two lateral passages (34, 35, 36), are present, with the part flows of the second storey and, optionally, third storey arranged further below being able to be diverted downwardly by curved guide lamellae.

2. A fluid inlet device according to claim 1, **characterised in that** three passages are respectively arranged on three stories; and **in that** two curved lamellae (11) separate central passages from lateral passages in the deflection unit (1).

3. A fluid inlet device according to claim 1 or claim 2, **characterised in that** the deflection unit (1) is formed with mirror symmetry with respect to a vertical plane (21) lying on a central axis of the apparatus; or **in that** the deflection unit is formed asymmetrically, with an asymmetry, which is formed with respect to a flow of the fed in fluid flowing asymmetrically through the inflow stubs (3).

4. A fluid inlet device according to any one of the claims 1 to 3, **characterised in that** the uppermost channels are covered by at least one planar or curved wall piece, which is aligned horizontally or with a downward inclination in the direction of the uppermost central part flow (131); or **in that** covering wall pieces are curved downwardly in the direction of the flow.

5. A fluid inlet device according to any one of the claims 1 to 4, **characterised in that** the horizontal widths of the central inlet passages (31, 32, 33) converge from top to bottom.

6. A fluid inlet device according to any one of the claims 1 to 5, **characterised in that** the inlet passages (31, 32, 33) and the diffuser-like passage sections following downstream are formed such that a loss of pressure in the inflowing fluid is minimal or largely minimal.

7. A fluid inlet device according to any one of the claims 1 to 6, **characterised in that** rib-type fluid deflectors (14) are arranged on concave surfaces of the curved guide lamellae (11, 12, 13); and/or **in that** the curved guide lamellae (11, 12, 13) are formed in a pocket-like manner at margins at the outlet side such that a fluid phase precipitated at the guide lamellae can be drained off from the fed in fluid flow through the pocket-like margins.

8. An apparatus, in particular a column (2), having at least one fluid inlet device according to any one of the claims 1 to 7, wherein a flow direction given by a central passage (31), faces towards the centre or towards an eccentric point of the central area.

9. Use of the fluid inlet device according to any one of the claims 1 to 7 for the purpose of feeding in and distributing a fluid, which is multiphase or single-phase, in particular of a gas flow which is loaded with a higher density phase, for example liquid droplets, or which only comprises one material or a single-phase mixture of materials, with a dispersed phase of higher density being able to be precipitated at least partly using its inertia in the case of a two-phase fluid.

## Revendications

1. Dispositif d'entrée de fluide pour un appareil, en particulier pour une colonne (2), comprenant une pipe d'admission (3) et une unité de déflexion (1) qui se raccorde en aval à celle-ci et qui comprend des lamelles de guidage (11, 12, 13) incurvées, de sorte qu'au moyen de l'unité de déflexion il est possible d'engendrer à partir d'un courant de fluide injecté des courants partiels (131, 132, 133 ou 134, 135, 136) centraux et latéraux, qui provoquent une tranquillisation de l'écoulement dans une région médiane de l'appareil,
**caractérisé en ce que** l'unité de déflexion comprend une zone d'entrée avec une pluralité de canaux d'admission (31, 32,..., 36) dans lesquels les sections des canaux restent constantes, ladite zone d'entrée pouvant être agencée au moins partiellement dans la pipe d'admission, **en ce que** les canaux d'admission se transforment dans des canaux semblables à des diffuseurs et formés avec les lamelles de guidage incurvées, et **en ce qu'**il y a au moins deux étages avec au moins un canal central (31, 32, 33) et deux canaux latéraux (34, 35, 36), de sorte que les courants partiels du second, et le cas échéant du troisième étage, agencé plus loin vers le bas, peuvent être déviés vers le bas par des lamelles de guidage incurvées.

2. Dispositif d'entrée de fluide selon la revendication 1, **caractérisé en ce que** trois canaux sont agencés respectivement sur trois étages, et **en ce que** dans l'unité de déflexion (1) de lamelles incurvées (11) séparent des canaux centraux vis-à-vis de canaux latéraux.

3. Dispositif d'entrée de fluide selon la revendication 1 ou 2, **caractérisé en ce que** l'unité de déflexion (1) est réalisée à symétrie plane par rapport à un plan vertical (21) posé sur un axe central de l'appareil, ou bien **en ce que** l'unité de déflexion est réalisée asymétrique, avec une asymétrie qui est réalisée par référence à un écoulement, du flux de fluide injecté, qui traverse de manière asymétrique la pipe d'admission (3).

4. Dispositif d'entrée de fluide selon l'une des revendications 1 à 3, **caractérisé en ce que** les canaux les plus en haut sont recouverts par au moins un morceau de paroi (10) plan ou cintré, qui est orienté soit horizontalement soit incliné vers le bas en direction du flux partiel central (131) le plus en haut, ou bien **en ce que** des morceaux de paroi de couverture sont cintrés vers le bas dans la direction d'écoulement.

5. Dispositif d'entrée de fluide selon l'une des revendications 1 à 4, **caractérisé en ce que** les largeurs horizontales des canaux d'admission centraux (31, 32, 33) vont en se rétrécissant du haut vers le bas.

6. Dispositif d'entrée de fluide selon l'une des revendications 1 à 5, **caractérisé en ce que** les canaux d'admission (31, 32,..., 36) et les tronçons de canaux en forme de diffuseurs qui font suite en aval sont réalisés de telle façon qu'une perte de pression dans le fluide entrant est minimale ou largement minimale.

7. Dispositif d'entrée de fluide selon l'une des revendications 1 à 6, **caractérisé en ce que** des déflecteurs à liquide (14) semblables à des nervures sont agencés sur les surfaces concaves des lamelles de guidage incurvées (11, 12, 13), et/ou
les lamelles de guidage incurvées (11, 12, 13) sont réalisées à la manière de poches sur des bordures du côté sortie, de sorte qu'une phase liquide qui se dépose au niveau des lamelles de guidage peut être amenée hors du flux de fluide injecté par les bordures semblables à des poches.

8. Appareil, en particulier colonne (2), comprenant au moins un dispositif d'entrée de fluide selon l'une des revendications 1 à 7, dans lequel une direction d'écoulement, imposée par un canal central (31), est dirigée vers le centre ou vers un point excentrique de la zone médiane.

9. Utilisation du dispositif d'entrée de fluide selon l'une des revendications 1 à 7 dans le but d'injecter et de distribuer un fluide, à plusieurs phases ou à une seule phase, en particulier d'un flux de gaz, qui est chargé d'une phase plus dense, par exemple de gouttelettes de liquide, ou bien qui n'est composé que d'un seul produit ou d'un mélange de produits à une seule phase, dans lequel, dans l'unité de déflexion - dans le cas d'un fluide à deux phases - une phase dispersée de plus forte densité est au moins partiellement séparable en exploitant son inertie.
